**Europäisches Patentamt**

(19) **European Patent Office**

**Office européen des brevets**

(11) Veröffentlichungsnummer: **0 141 121**
**B1**

(12) # EUROPÄISCHE PATENTSCHRIFT

(45) Veröffentlichungstag der Patentschrift:
**24.06.87**

(51) Int. Cl.⁴: **B 29 C 59/10,** B 29 C 71/04,
B 23 H 1/00, H 01 T 19/00

(21) Anmeldenummer: **84110182.7**

(22) Anmeldetag: **27.08.84**

(54) **Vorrichtung zum Bearbeiten von folienartigen Schichten mittels einer Funkenentladung.**

(30) Priorität: **27.09.83 DE 8327709 U**

(43) Veröffentlichungstag der Anmeldung:
**15.05.85 Patentblatt 85/20**

(45) Bekanntmachung des Hinweises auf die Patenterteilung:
**24.06.87 Patentblatt 87/26**

(84) Benannte Vertragsstaaten:
**BE DE FR GB IT SE**

(56) Entgegenhaltungen:
**EP - A - 0 010 632**
**DE - A - 2 855 605**
**GB - A - 1 453 653**

(73) Patentinhaber: **Kroos geborene Schroeter, Liselotte,
Ahornweg 10, D-8135 Söcking (DE)**

(72) Erfinder: **Kroos geborene Schroeter, Liselotte,
Ahornweg 10, D-8135 Söcking (DE)**

(74) Vertreter: **Bardehle, Heinz, Dipl.-Ing. et al, Patent- und
Rechtsanwälte Bardehle-Pagenberg-Dost-Altenburg &
Partner Galilelplatz 1 Postfach 86 06 20,
D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine in einem Kasten untergebrachte Vorrichtung zum Bearbeiten von folienartigen Schichten in Form von durch die Vorrichtung geleiteten Bahnen mittels einer Funkenentladung zwischen einer als Walze ausgebildeten Elektrode und einer dazu achsparallel angeordneten Gegenelektrode, wobei die eine Elektrode von einem Deckel des Kastens getragen ist.

Eine derartige Vorrichtung ist aus der deutschen Gebrauchsmusterschrift 3 328 009 bekannt. Bei dieser dem Berührungsschutz dienenden Vorrichtung ist der Deckel über ein Scharnier am Kasten angelenkt, so dass zwecks Einführung einer Bahn der Deckel in eine Schräglage hochgekippt werden kann. Bei dieser Anordnung hat sich als nachteilig herausgestellt, dass für die Öffnung des Kastens durch das Hochkippen des Deckes nach oben hin ein Freiraum bestehen muss, der nicht immer zur Verfügung steht.

Der Erfindung liegt die Aufgabe zugrunde, den Kasten so zu gestalten, dass der für das Öffnen des Kastens erforderliche Platzbedarf praktisch nicht ins Gewicht fällt. Erfindungsgemäss geschieht dies dadurch, dass die andere Elektrode in einer durch den Deckel abgeschlossenen, von Schienen getragenen Schublade gelagert ist, die in Längsrichtung der Bahnen unter dem Deckel aus dem Kasten herausbewegbar ist.

Bei dieser Gestaltung des Kastens ist der Deckel ein unbeweglicher Bestandteil des Kastens. Die Öffnung des Kastens erfolgt durch Herausbewegung der Schublade, die wegen ihrer der Längsrichtung der Bahnen entsprechenden Schubbewegung in einen Bereich aus dem Kasten herausbewegbar ist, der sowieso von den Bahnen durchlaufen wird, so dass der für die Herausbewegung der Schublade erforderliche Freiraum ohne weiteres zur Verfügung steht. Ausserdem ergibt sich der Vorteil, dass bei der Verschiebebewegung der Schublade dann keine Schwerkraft zu überwinden ist, wenn diese Verschiebebewegung horizontal verläuft, wovon für den Normalfall ausgegangen werden kann.

Vorteilhaft sieht man in dem Kasten 2 zur beidseitigen Bearbeitung dienende Walzen je mit einer Gegenelektrode vor, von denen die eine vom Deckel und die andere von der Schublade getragen ist, wobei beide Walzen in Schubrichtung der Schublade gegeneinander versetzt sind. Bei dieser Anordnung verlaufen die Bahnen innerhalb des Kastens nach Art einer S-Kurve, wobei sie jeweils eine Walze teilweise umspannen. Wird nun diese Umspannung infolge entsprechender Zu- bzw. Abführung der Bahnen so gewählt, dass sich auf der Einlauf- und Auslaufseite eine ausreichend schräge Führung ergibt, dann wird durch den von einer Bahn ausgeübten Zug eine Kraft auf die Schublade ausgeübt, die diese zurück in den Kasten hineinzieht.

Um eine nur geringen Reibungskräften ausgesetzte Verschiebung der Schublade zu ermöglichen, bildet man die Schienen zweckmässig als Teleskopführungen aus.

An dem Kasten kann man mindestens eine Umlenkwalze anbringen, um für die Zu- bzw. Wegführung der Bahnen die jeweils günstigen Winkel zu erzielen.

In den Figuren ist ein Ausführungsbeispiel der Erfindung dargestellt.

Es zeigen:

Figur 1 die Vorrichtung geschnitten in Seitensicht, und zwar mit eingeschobener Schublade,

Figur 2 die gleiche Vorrichtung in gleicher Lage mit herausbewegter Schublade,

Figur 3 eine Ansicht der Anordnung gemäss Figur 1 um 90° gedreht, und zwar in Blickrichtung auf die Vorderseite der Schublade, wobei die in den Figuren 1 und 2 dargestellte Umlenkwalze weggelassen ist.

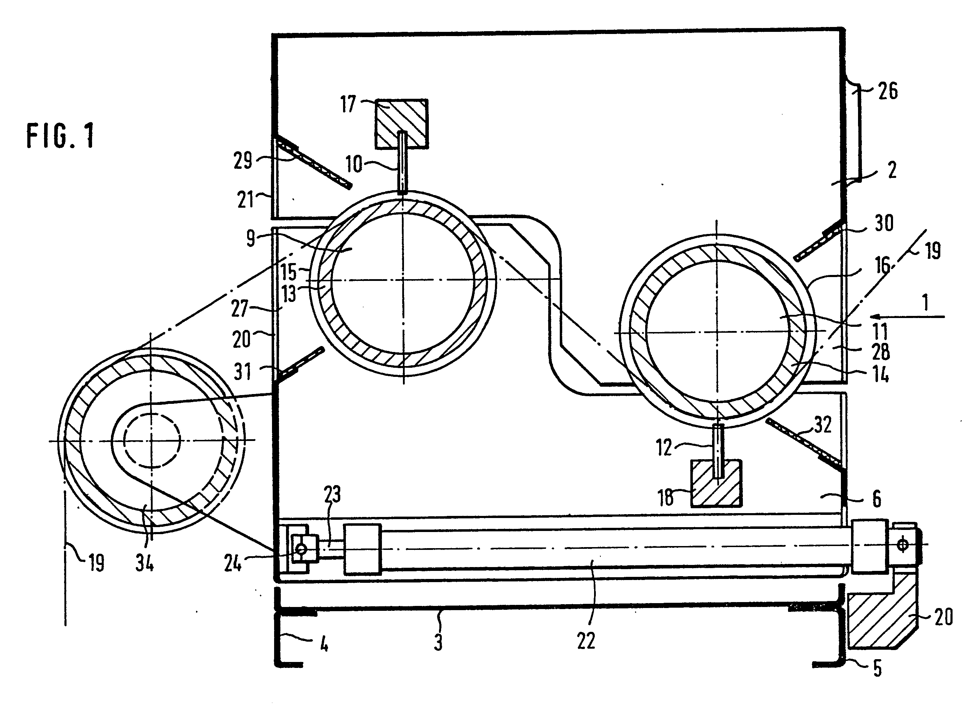

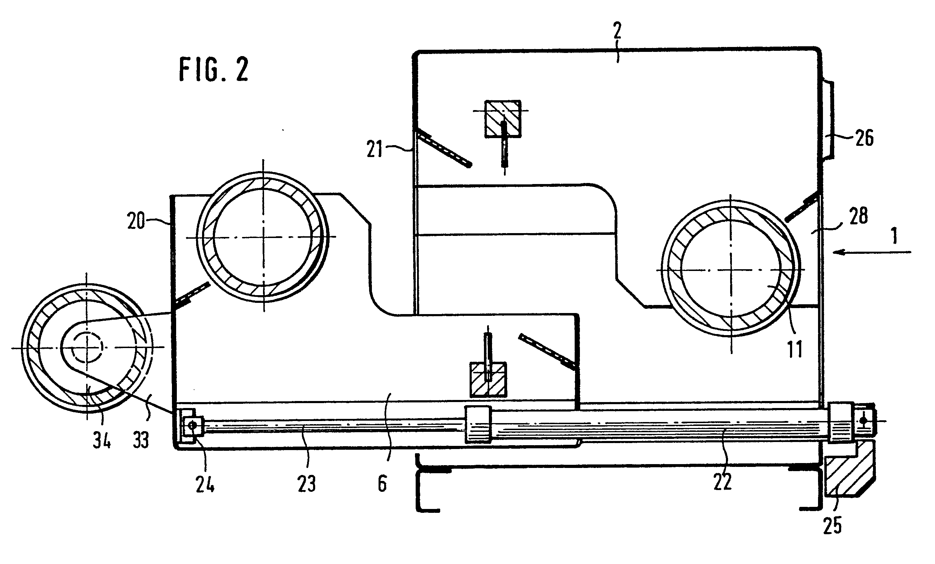

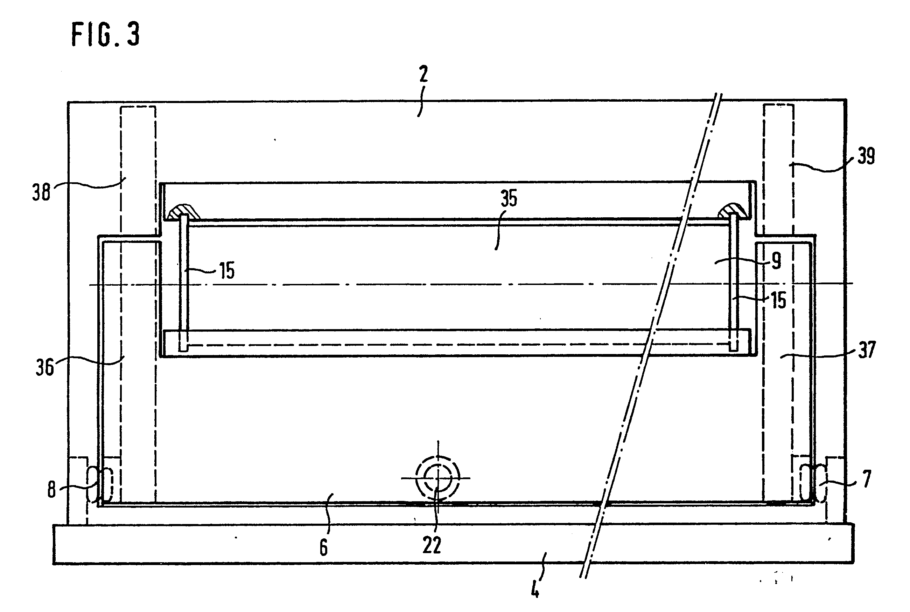

Die in Figur 1 dargestellte Vorrichtung besteht aus dem Kasten 1 mit seinem Deckel 2 und dem Boden 3. Über dem Boden 3 ist der Kasten 1 dem aus den beiden U-Schienen 4 und 5 bestehenden Gestell befestigt. Der Kasten 1 enthält die Schublade 6, die mittels der aus Figur 3 ersichtlichen Teleskopschienen 7 und 8 aus dem Kasten 1 heraus- und in diesen hineinbewegbar ist (herausgezogene Lage siehe Figur 2).

Gemäss Figur 1 enthält der Kasten 1 zwei Paare von Elektroden, nämlich im einen Paar die Walze 9 und die als Gegenelektrode dienende Messerelektrode 10 sowie im anderen Paar die Walze 11 und die als Messerelektrode ausgebildete Gegenelektrode 12. Diese Elektroden sind in hier nicht interessierender Weise an eine Hochspannungsquelle angeschlossen, so dass sich jeweils zwischen den Elektroden 9 und 10 bzw. 11 und 12 eine Funkenentladung in bekannter Weise ausbildet. Die Walzen 9 und 11 weisen dabei jeweils den Isoliermantel 13 bzw. 14 auf. Ausserdem sind die Walzen 9 und 11 jeweils stirnseitig mit Begrenzungsscheiben 15 bzw. 16 versehen, die ein seitliches Auswandern der zu bearbeitenden Bahnen verhindern. Die Messerelektroden 10 und 12 sind über die Isolierträger 17 und 18 am Deckel 2 bzw. an der Schublade 6 befestigt.

Wie aus Figur 1 ersichtlich ist in etwa S-förmigem Verlauf eine aus einer Kunststoffolie bestehende, strichpunktiert gezeichnete Bahn 19 gelegt, die im Falle der Ausbildung einer Funkenentladung zwischen den Elektroden 9 und 10 von der einen Seite und zwischen den Elektroden 11 und 12 von ihrer anderen Seite bearbeitet wird. Die dargestellte Vorrichtung erlaubt somit eine Bearbeitung von beiden Seiten. Es sei jedoch darauf hingewiesen, dass für den Fall einer nur einseitig erwünschten Bearbeitung die in der Figur 1 dargestellte Vorrichtung auf die Anordnung nur eines Elektrodenpaares beschränkt sein kann, beispielweise auf die Walze 9 und die Messerelektrode 10.

Bei der dargestellten Vorrichtung sind die Walze 9 und die Messerelektrode 12 an der Schublade 6 befestigt, während die Messerelektrode 10 und die Walze 11 am Deckel 2 angeordnet sind. Infolgedessen bewegen sich beim Herausziehen der Schublade 6 aus dem Kasten 1 die Walze 9 und die Messerelektrode 12 heraus (siehe Figur 2), womit sich ein ausreichender Freiraum ergibt, durch den dann eine Bahn leicht hindurchgefädelt werden kann.

Die herausgezogene Lage der Schublade 6 ist, wie gesagt, in Figur 2 dargestellt. Wie ersichtlich, ragt die Schublade 6 mit ihrer Frontplatte 20 aus dem Kasten 1 heraus, wobei also die Frontplatte 20 gegenüber der Frontplatte 21 des Kastens 1 entsprechend versetzt sind. Nach erfolgter Einfädelung einer Bahn wird dann die Schublade 6 wieder in die in der Figur 1 dargestellte Normallage zurückgeschoben, in der aufgrund der Versetzung der beiden Walzen 9 und 11 in Schubrichtung der Schublade 6 sich die S-förmige Führung der Bahn 19 ergibt.

Für die weitgehend reibungsarme Hin- und Herbewebung der Schublade 6 sind, wie gesagt, die in Figur 3 dargestellten Teleskopführungen 7 und 8 zuständig, die als bekannte Bauelemente mit Kugelführungen zur Verfügung stehen. Die Ausführung der Hin- und Herbewegung der Schublade 6 wird hier mittels der hydraulisch oder pneumatisch betätigten Kolbenzylindereinheit 22 bewirkt, bei deren Aktivierung der Stössel 23 herausbewegt wird, an dem mittels des Stifts 24 die Schublade 6 befestigt ist. Die Kolbenzylindereinheit 22 ist mittels des Winkelstücks 25 an der U-Schiene 5 befestigt.

Da sich bei der Bearbeitung von Kunststoffolien mittels einer Funkenentladung unter Umständen giftige Gase entwickeln, ist die Vorrichtung mit einem am Deckel 2 angebrachten Absaugstutzen 26 versehen, an den in bekannter Weise eine hier nicht dargestellte Absaugvorrichtung angeschlossen ist. Über den Absaugstutzen 26 wird Luft in den Innenraum des Kastens 1 hineingesaugt, und zwar über den Einlass 27 und den Auslass 28. Damit nun im Bereich des Einlasses 27 und des Auslasses 28 keine zu grossen Spalte entstehen, ist der Deckel 2 mit den Abdeckungen 29 und 30 und die Schublade mit den Abdeckungen 31 und 32 versehen, die von den betreffenden Wandungen des Deckels 2 und der Schublade 6 nach innen in Richtung auf die betreffende Walze 9 bzw. 11 zu ragen und dieser gegenüber nur einen relativ geringen Spalt freilassen. Die Abdeckungen 29, 30 bzw. 31, 32 bestehen aus Kunststoff, können aber auch gegenüber einer auf Masse liegenden Elektrode aus Metall bestehen, da der Kasten 1 sowieso an Masse angeschlossen ist. Falls der im Deckel 2 angeordnete Absaugschutz 26 wegen der den Innenraum des Kastens 1 aufteilenden Bahn 19 für eine vollständige Absaugung nicht ausreicht, ist auch im Boden 3 ein entsprechender Absaugstutzen vorzusehen.

Wie in den Figuren 1 und 2 dargestellt, ist an der Schublade 6 über Tragarme 33 die Umlenkrolle 34 angebracht, die dafür sorgt, dass die in die Vorrichtung hineingeführte Bahn 19 ungehindert durch den Einlass 27 gelangt, wobei durch die Anordnung der Umlenkrolle 34 ausserdem dafür gesorgt wird, dass der Umschlingungswinkel der Walze 9 konstant bleibt. Ausserdem hält die Umlenkrolle 34 auch in der herausgezogenen Lage der Schublade 6 eine über sie geleitete Bahn von der Schublade 6 weg, so dass die Bahn nicht von irgendwelchen Kanten an der Schublade 6 beschädigt werden kann. Auf der Seite des Auslasses 28 ergibt sich normalerweise stets ein konstanter Umschlingungswinkel für die Walze 11, da auf dieser Seite üblicherweise eine Aufwickelrolle für das fertig bearbeitete Material angeordnet ist.

Wie die Figur 2 anschaulich zeigt, erstreckt sich der Platzbedarf für die Öffnung des Kastens 1 in eine Richtung, aus der normalerweise eine zu bearbeitende Bahn 19 der Vorrichtung zugeführt wird, so dass Hier der erforderliche Platz ohne weiteres zur Verfügung steht.

Figur 3 zeigt die in Figur 1 dargestellte Vorrichtung unter Weglassung der Umlenkrolle 34. Man erkennt hier die Walze 9 mit den beiden Begrenzungsscheiben 15, wobei die Aufhängung der Walze 9 in der Schublade 6 durch die eine Achse symbolisierende strichpunktierte Mittellinie 35 angedeutet ist. Die seitliche Lagerung der Walze 9 erfolgt in den beiden Tragwänden 36 und 37, die an der Schublade 6 befestigt sind. Der Deckel 2 weist ebenfalls entsprechende Tragwände auf, nämlich die Tragwände 38 und 39, die am Deckel 2 befestigt sind, und die der Lagerung der in Figur 3 nicht sichtbaren Walze 11 dienen. In Figur 3 ist noch die Lage der Kolbenzylindereinheit 22 dargestellt, mit der die Hin- und Herbewegung der Schublade 6 bewirkt wird.

Es sei noch darauf hingewiesen, dass es sich bei den zu bearbeitenden folienartigen Schichten in Form von Bahnen nicht nur um Kunststoffolien handeln kann, sondern auch z.B. um mit Kunststoff beschichtete Metallfolien. Ebenso lassen sich Metallfolien oder metallisierte Kunststoffolien behandeln, wobei dann allerdings die Metallfolie bzw. metallisierte Folie über eine Metallwalze zu leiten ist, der eine mit einer Kunststoffschicht versehene Gegenelektrode gegenübersteht. Schliesslich sei noch erwähnt dass die in den Figuren dargestellten Messerelektroden auch durch Walzenelektroden ersetzt werden können.

**Patentansprüche**

1. In einem Kasten (1) untergebrachte Vorrichtung zum Bearbeiten von folienartigen Schichten in Form von durch die Vorrichtung geleiteten Bahnen (19) mittels einer Funkenentladung zwischen einer als Walze (9, 11) ausgebildeten Elektrode und einer dazu achsparallel angeordneten Gegenelektrode (10, 12), wobei die eine Elektrode (10, 11) von einem Deckel (2) des Kastens getragen ist, dadurch gekennzeichnet, dass die andere Elektrode (9, 12)) in einer durch den Deckel (2) angeschlossenen, von Schienen (7, 8) getragenen Schublade (6) gelagert ist, die in Längsrichtung der Bahnen (19) unter dem Deckel (2) aus dem Kasten (1) herausbewegbar ist.

2. Vorrichtung nach Anspruch 1, dadurch gekennzeichnet, dass in dem Kasten (1) zwei zur beidseitigen Bearbeitung dienende Walzen (9, 11) je mit einer Gegenelektrode vorgesehen sind, von denen die eine vom Deckel (2) und die andere von der Schublade (6) getragen ist, wobei beide Walzen (9, 11) in Schubrichtung der Schublade (6) gegeneinander versetzt sind.

3. Vorrichtung nach Anspruch 1 oder 2, dadurch gekennzeichnet, dass die Schienen (7, 8) als Teleskopführungen ausgebildet sind.

4. Vorrichtung nach einem der Ansprüche 1 bis 3, dadurch gekennzeichnet, dass an dem Kasten (1) mindestens eine Umlenkrolle (34) angebracht ist.

## Claims

1. Apparatus housed in a case (1) for use in the processing of foil-like layers in the form of webs (19) moved through the apparatus by means of spark discharges being effected between an electrode configured as a roll (9, 11) and a counter-electrode (10, 12) disposed in a paraxial relationship relative thereto, with one (10, 11) of said electrodes being supported by a cover (2) of the case, characterized in that said other electrode (9, 12) is located in a drawer (6) covered by said cover (2) and supported on rails (7, 8), the drawer being adapted to be moved out of the case (1) underneath the cover (2) in the longitudinal direction of the webs (19).

2. Apparatus as in claim 1, characterized in that the case (1) has therein for processing both sides of the webs two rolls (9, 11) each having a counter electrode associated therewith, with one of said rolls being supported by the cover (2) and the other being supported by the drawer (6) and both rolls (9, 11) being mutually offset in the direction of movement of the drawer (6).

3. Apparatus as in claim 1 or 2, characterized in that rails (7, 8) are formed as telescope guides.

4. Apparatus as in any one of claims 1 to 3, characterized in at least one guide roll (34) being provided on the case (1).

## Revendications

1. Dispositif disposé dans une caisse (1), destiné au traitement de feuilles minces, se présentant sous la forme de bandes (19) guidées à travers le dispositif, à l'aide d'une décharge à étincelles se produisant entre une électrode en forme de rouleau (9, 11) et une contre-électrode (10, 12) dont l'axe est parallèle à l'axe de la première, l'une des électrodes (10, 11) étant portée par un couvercle (2) de la caisse, caractérisé en ce que l'autre électrode (9, 12) est montée dans un tiroir (6) fermé par le couvercle (2) et porté par des rails (7, 8), qui est amovible dans la direction longitudinale des bandes (19) sous le couvercle (2) peut être retiré de la caisse (1).

2. Dispositif selon la revendication 1, caractérisé en ce que des rouleaux (9, 11) servant au traitement sur les deux faces, sont prévus dans la caisse (1) avec chacun une contre-électrode, dont l'une est portée par le couvercle (2) et l'autre par le tiroir (6), les deux rouleaux (9, 11) étant décalés l'un par rapport à l'autre dans la direction de coulissement du tiroir (6).

3. Dispositif selon la revendication 1 ou 2, caractérisé en ce que les rails (7, 8) sont des rails téléscopiques.

4. Dispositif selon l'une des revendications 1 à 3, caractérisé en ce qu'au moins un rouleau de renvoi (34) est monté dans la caisse (1).

FIG. 1

FIG. 2

FIG.3